# EUROPÄISCHE PATENTSCHRIFT

(11) **EP 0 875 654 B1**
(45) Veröffentlichungstag und Bekanntmachung des Hinweises auf die Patenterteilung: **07.11.2001**
(21) Anmeldenummer: 97810276.2
(22) Anmeldetag: 01.05.1997
(51) Int. Cl.: E06B 3/673, B29C 53/08

(54) **Verfahren zur Herstellung von abgebogenen Hohlprofil-Leisten**
Method for fabricating bent hollow-profiled strips
Procédé de fabrication des profilés creux coudés

(43) Veröffentlichungstag der Anmeldung: 04.11.1998
(73) Patentinhaber: Saint-Gobain Vitrage Suisse AG, 3014 Bern (CH)
(72) Erfinder: Trautz, Hans, 75180 Pforzheim (DE)
(74) Vertreter: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE

(56) Entgegenhaltungen:
- EP-A- 0 103 111
- AT-A- 377 751
- BE-A- 1 008 970
- DE-A- 19 533 685
- DE-U- 7 825 704
- GB-A- 2 118 605
- US-A- 4 113 536

## Beschreibung

Die vorliegende Erfindung bezieht sich auf ein Verfahren zur Herstellung von abgebogenen Hohlprofil-Leisten gemäss Oberbegriff von Patentanspruch 1, insbesondere für die Verwendung als Abstandhalter-Rahmen aus Kunststoff für eine Mehrscheiben-Isolierverglasung.

Ein solches Verfahren ist aus der EP-A-103 111 bekannt, worin als Beispiele nur Metallrahmenprofile angegeben werden, die an den Ecken durch einen Schmelzkleber verstärkt werden.

Bei vielen Anwendungen von Hohlprofil-Leisten, insbesondere bei deren Verwendung für die Herstellung von Abstandhalter-Rahmen für Mehrscheiben-Isolierverglasungen ist es wichtig, dass die nach aussen liegende Oberfläche des Rahmens dicht ist, und es wurde daher angestrebt, die Rahmen durch Biegen einer Leiste herzustellen und nicht durch Zusammensetzen einzelner Leisten.

Bei der Herstellung von Rahmen aus Metallprofilen, meistens aus Aluminium, ist aus den Verfahren gemäss beispielsweise EP-A-103 111 oder EP-A-003 715 ausserdem bekannt, dass beim Profilstab am Innen zu liegenden Wandabschnitt quer zu seiner Längserstreckung eingeschnitten und dann gebogen wird. Dieser Einschnitt hat zum Ziel, beim Biegen des Stabes eine Stauchung an der Ecke zu vermeiden.

Während Abstandhalter-Rahmen aus Metall seit längerer Zeit bekannt sind und somit deren Biegeverfahren gut untersucht worden sind, ergeben sich bei der Herstellung von Abstandhalter-Rahmen aus Kunststoff weitere Probleme, da eine Biegung von Hohlprofil-Leisten ohne Stauchung und insbesondere auch ohne Schwächung durch z.B. Einsägen oder Stanzen der Innenkante des Rahmens grosse Probleme bietet.

Von diesem bekannten Stand der Technik und von den geschilderten Problemen ausgehend ist es Aufgabe der vorliegenden Erfindung, ein Verfahren zur Herstellung von abgebogenen Hohlprofil-Leisten aus thermoplastischen Kunststoff anzugeben, bei dem der daraus gebildete Rahmen an dessen gebogenen Stellen die für die vorgesehenen Zwecke ausreichende Stabilität aufweist und die notwendige Form beibehält. Es ist insbesondere auch eine Aufgabe der vorliegenden Erfindung ein Verfahren anzugeben, mit welchem Abstandhalter aus thermoplastischem Kunststoff für eine Mehrscheiben-Isolierverglasung gemäss DE-A-195 33 685 zu Rahmen geformt werden können. Diese Aufgaben werden mit dem im unabhängigen Anspruch 1 definierten Verfahren gelöst.

Die Erfindung wird im folgenden anhand von Zeichnungen eines Ausführungsbeispiels näher erläutert, wobei die Figuren verschiedene erfindungsgemässe Verfahrensschritte zum Verstärken einer Biegestelle und zum Biegen einer Hohlprofil-Leiste zeigen, die dann einen Rahmen ergeben können.
- Figur 1: zeigt in perspektivischer Sicht eine Profilleiste,
- Figur 2: zeigt die Leiste von Figur 1 mit einem Einschnitt,

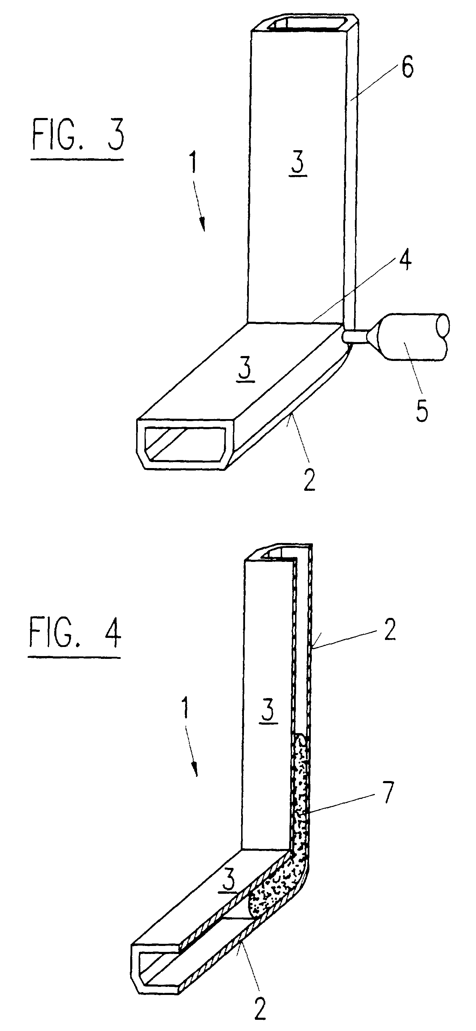

- Figur 3: zeigt die gebogene Profilleiste, an der eine angesetzte Einspritzdüse angedeutet ist, und
- Figur 4: zeigt die fertige gebogene Leiste mit verstärkter Ecke in einem Längsschnitt.

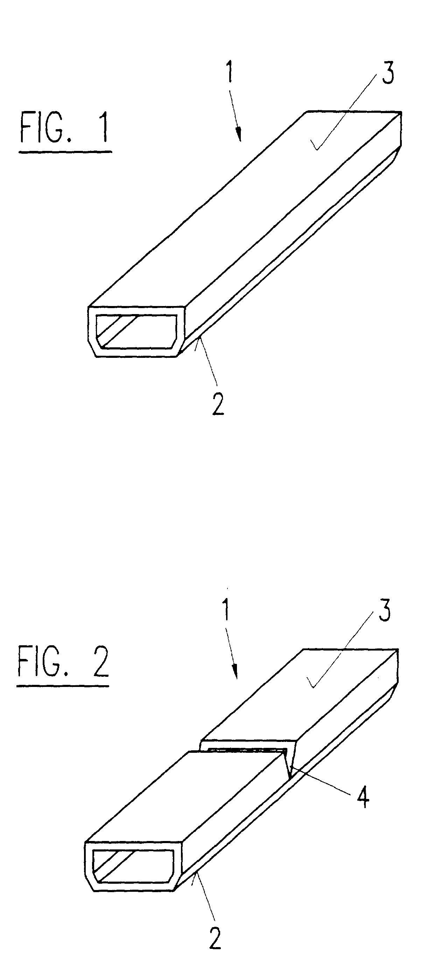

In Figur 1 ist eine Hohlprofil-Leiste 1 dargestellt, die zum besseren Verständnis vereinfacht und schematisch dargestellt ist, aber auch die Formen und die Ausgestaltung gemäss oben erwähnter DE-A-195 33 685 haben kann und beispielsweise aus einem glasfaserverstärkten Kunststoff bestehen kann, und die an der Aussenseite 2 eine aufgeklebte Metallfolie aufweisen kann. Im folgenden wird die Hohlprofil-Leiste 1 kurz mit Leiste 1 bezeichnet.

Eine solche Leiste 1 kann automatisch aus einem Regal einer Biegevorrichtung der Fräs- und Ablänganlage des Biegeautomaten zugeführt werden, wo sie gegebenenfalls mittels Längsverbinder mit dem Reststuck der vorangegangenen Leiste automatisch zu einer Endlosleiste verbunden wird. Beim Abmessen der Leiste auf die benötigte Länge des zu biegenden Rahmens wird sie am ersten Biegepunkt durch die elektronische Steuerung gestoppt. Nachher wird die Leiste einer Schneid- oder Fräseinrichtung zugeführt, wo an der Innenseite 3 der Leiste unter Vorgabe der Schnittiefe Einschnitt 4 vorgenommen wird.

Der Einschnitt 4 kann selbstverständlich auch mit dem Absägeblatt durchgeführt werden, das man durch Einstellen der Schnittiefe zu diesem Zweck benutzen kann. Der Einschnitt wird an jeder zu biegenden Stelle der Leiste durchgeführt. Die Form und die Tiefe des Einschnittes richten sich im wesentlichen nach dem zu biegenden Winkel, wobei der in Figur 2 schematisch gezeigte V-formige Einschnitt für eine 90°-Biegung vorgesehen ist. Nach der letzten Biegefräsung wird die Leiste mit dem Sägeblatt auf die benötigte Länge abgesägt.

Das Biegen wird in den nachfolgend beschriebenen Schritten durchgeführt. Zuerst wird die Leiste im Biegewerkzeug der Biegevorrichtung zur ersten Biegeposition transportiert und nach Erreichen der Biegestelle in einer Klemmvorrichtung vor und nach der Biegestelle eingespannt. Dann wird die Wandung der Leiste bei der Biegestelle, bei der beispielsweise eine erste Warmluftduse (nicht gezeigt) von unten auf die Biegestelle gerichtet wird und eine zweite Warmluftduse (nicht gezeigt) direkt durch den Einschnitt 4 in der Leiste auf die Biegestelle gerichtet ist, vorgewärmt. Nach der gewünschten und einstellbaren Vorwärmzeit wird die Heissluft abgestellt und die Düsen werden aus dem Biegebereich herausgeschwenkt.

Nach dem Erwärmen fahren die Klemmbacken auf Biegeposition und danach die Klemmbiegebacke des Biegewerkzeugs auf die gewünschte Winkelgradeinstellung, die 90°, aber auch davon verschieden sein kann. Mit dem Beginn des Biegens wird eine beheizte Einspritzdüse 5 durch eine Querwandung 6 am Biegepunkt der Leiste hindurchgestossen. Bei Erreichen des gewünschten Biegewinkels, während die Düse die Wandung der Leiste durchstossen hat, wird mit dem Einspritzen einer thermoplastischen Kunststoffmasse 7, z.B. bekannt unter den Abkürzungen SAN, ABS und gegebenenfalls glasfaserverstarkt, begonnen. Dabei kann die Einspritzmenge des Materials automatisch eingestellt werden. Die Einspritzposition bzw. der Einspritzwinkel wird so gewählt, dass sich die Kunststoff-Verstarkungsmasse im Innern des Profils beidseitig der Ecke gleichmässig verteilt.

Mit dem Beginn des Einspritzens wird die Einspritzdüse um die Wandstärke der Leiste zurückgefahren, damit das beim Einspritzen entstandene Loch in der Leiste automatisch mit Kunststoff geschlossen wird.

Analog einem Spritzgusswerkzeug wird die Klemmeinheit gekühlt. Nach Ablauf der Kühlzeit fährt das Biegewerkzeug in die Ausgangsposition zuruck und die Leiste wird zur nachsten Biegeecke transportiert. Dieser Vorgang wiederholt sich so oft, bis der Rahmen fertig ist.

Für die Durchführung des erfindungsgemässen Verfahrens ist es nicht erheblich, ob die Trockenmittel-Körner vor oder nach dem Biegen des Rahmens eingefüllt werden. Falls die Körner vorher eingefüllt worden sind, mussen beim Einspritzen der Verstärkungsmasse die Körner die Möglichkeit haben auszuweichen, oder sie werden abgesaugt.

## Patentansprüche

1. Verfahren zur Herstellung einer abgebogenen Hohlprofil-Leiste, wobei beim Biegen beidseits der Biegestelle zwecks Verstärkung der abgebogenen Bereiche in den Hohlraum Kunststoff eingefüllt wird, **dadurch gekennzeichnet, dass** die Hohlprofilleiste selbst aus thermoplastischem Kunststoff ist, und dass der Verstärkungs-Kunststoff (7) mittels einer Einspritzdüse (5) eingebracht wird, wobei die Düse die Leistenwand (6) bei der Biegestelle durchschmilzt und nach dem Einbringen des Kunststoffs das entstandene Loch wieder geschlossen wird.

2. Verfahren nach Anspruch 1, **gekennzeichnet durch** folgende Schritte:
- Einspannen der Leiste (1) in eine Biegevorrichtung,
- Erwärmen der Biegestelle,
- Biegen der Leiste,
- Einbringen des Verstärkungskunstoffs (7) in den Hohlraum der Leiste bei der Biegestelle und beidseitig des gebogenen Bereiches zu seiner Verstärkung.

3. Verfahren nach Anspruch 1 oder 2, **dadurch gekennzeichnet, dass** thermoplastischer Kunststoff, mit oder ohne Faserverstärkung, in den gebogenen Bereich eingebracht wird.

4. Verfahren nach einem der Ansprüche 1 bis 3, **dadurch gekennzeichnet, dass** vor dem Biegen die nach Innen zu liegende Seite (3) bei der Biegestelle mit einem Einschnitt (4) versehen wird.

## Claims

1. Method for producing a bent hollow profile strip, in which a plastic material is filled into the hollow section on both sides of the bend point in order to reinforce the bent areas, **characterised in that** the hollow profile strip itself is made of a thermoplastic material, and that the reinforcing plastic material (7) is introduced by means of an injection nozzle (5), the nozzle melting through the strip wall (6) at the bend point, and the resulting hole being closed again when the plastic material has been introduced.

2. Method according to claim 1, **characterised by** the steps of:
- chucking the strip (1) in a bending device;
- heating the bend point;
- bending the strip;
- introducing the reinforcing plastic material (7) into the hollow section of the strip at the bend point and on both sides of the bent area in order to reinforce it.

3. Method according to claim 1 or 2, **characterised in that** a thermoplastic material with or without glass fibre reinforcement is introduced into the bent area.

4. Method according to one of claims 1 to 3, **characterised in that** the inwardly facing side (3) is provided with an incision (4) at the bend point prior to the bending operation.

## Revendications

1. Procédé de fabrication d'une barre profilée creuse pliée, une matière plastique étant introduite dans la cavité des deux côtés du point de pliage afin de renforcer les zones pliées, **caractérisé en ce que** ladite barre profilée creuse elle-même est en matière thermoplastique, et que la matière plastique de renforcement (7) est introduite à l'aide d'une buse d'injection (5), ladite buse fondant la paroi (6) de la barre au point de pliage, et le trou percé étant refermé après l'introduction de la matière plastique.

2. Procédé selon la revendication 1, **caractérisé par** les étapes suivantes:
- serrage de la barre (1) dans un dispositif de pliage,
- chauffage du point de pliage,
- pliage de la barre,
- introduction de la matière plastique de renforcement (7) dans la cavité de la barre au point de pliage et des deux côtés de la zone pliée aux fins de renforcement de cette dernière.

3. Procédé selon les revendications 1 ou 2, **caractérisé en ce qu'**une matière thermoplastique, renforcée à la fibre de verre ou non, est introduite dans la zone pliée.

4. Procédé selon l'une des revendications 1 à 3, **caractérisé en ce qu'**avant le pliage, le côté (3) en regard vers l'intérieur est pourvu d'une incision (4) au point de pliage.
